# EUROPEAN PATENT SPECIFICATION

(11) **EP 4 283 465 B1**
(45) Date of publication and mention of the grant of the patent: **31.12.2025**
(21) Application number: 22206881.9
(22) Date of filing: 11.11.2022
(51) Int. Cl.: G06F 9/50, G06N 20/20

(54) **DATA PROCESSING METHOD AND APPARATUS, AND STORAGE MEDIUM**
DATENVERARBEITUNGSVERFAHREN UND -VORRICHTUNG SOWIE SPEICHERMEDIUM
PROCÉDÉ ET APPAREIL DE TRAITEMENT DE DONNÉES, ET SUPPORT DE STOCKAGE

(30) Priority: 25.05.2022 CN 202210580369
(43) Date of publication of application: 29.11.2023
(73) Proprietor: Beijing Baidu Netcom Science Technology Co., Ltd., Beijing 100085 (CN)
(72) Inventor: WANG, Chao, BEIJING, 100085 (CN); LIN, Xiangyue, BEIJING, 100085 (CN); LIANG, Yang, BEIJING, 100085 (CN); SHI, En, BEIJING, 100085 (CN); QIAO, Shuangshuang, BEIJING, 100085 (CN)
(74) Representative: Deambrogi, Edgardo

(56) References cited:
- EP-A1- 3 836 037
- US-A1- 2012 284 212

## Description

### TECHNICAL FIELD

The present disclosure relates to the field of artificial intelligence technology, in particular, to the field of machine learning and cloud computing technology, and specifically, to a data processing method and apparatus, an electronic device and a storage medium.

### BACKGROUND

In a machine learning application scenario, it is necessary to update and iterate a machine learning model in time, so that the model implements a better use effect. The proximity data generated in an online prediction often implements a better result for the update iteration of the model. In this manner, the model may be continuously adapted to changes in user behaviors. EP3836037A1 introduces about a method for executing a machine learning process. US20120284212A1 introduces about a system in which an updated accuracy score for each predictive model is determined.

### SUMMARY

The present disclosure provides a data processing method and apparatus, and a storage medium. The invention is set out in the appended set of claims.

In the solution of the present disclosure, the whole flow management of the model self-taught learning service is implemented, and the management difficulty and the management cost are reduced.

It is to be understood that the content described in this part is neither intended to identify key or important features of the embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure.
FIG. 1 is a diagram of a data processing method according to an embodiment of the present disclosure.
FIG. 2 is a diagram of another data processing method according to an embodiment of the present disclosure.
FIG. 3 is a diagram of another data processing method according to an embodiment of the present disclosure.
FIG. 4 is a diagram of another data processing method according to an embodiment of the present disclosure.
FIG. 5 is a diagram of a service model DAG according to an embodiment of the present disclosure.
FIG. 6 is a diagram illustrating the structure of a data processing apparatus according to an embodiment of the present disclosure.
FIG. 7 is a block diagram of an electronic device for implementing a data processing method according to an embodiment of the present disclosure.

### DETAILED DESCRIPTION

Example embodiments of the present disclosure, including details of embodiments of the present disclosure, are described hereinafter in conjunction with drawings to facilitate understanding. The example embodiments are illustrative only.

A data processing method and a data processing apparatus provided in the embodiments of the present disclosure are applied to a machine learning application scenario. Each data processing method provided in the embodiments of the present disclosure may be executed by a data processing apparatus. This apparatus may be performed by software and/or hardware and is specifically configured in an electronic device. The electronic device may be a computer or a server. This is not limited in the present disclosure.

For ease of understanding, a data processing method is described in detail first.

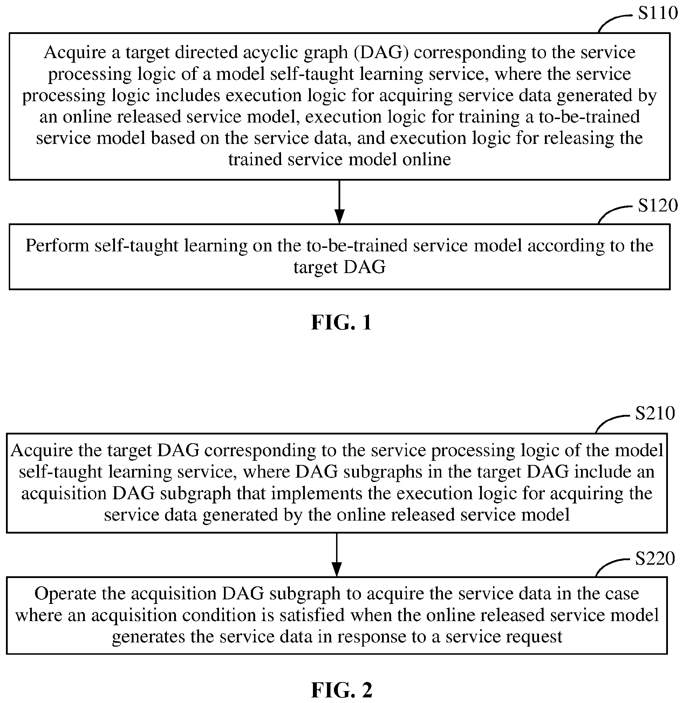

A data processing method shown in FIG. 1 includes the steps below.

In S110, a target directed acyclic graph (DAG) corresponding to the service processing logic of a model self-taught learning service is acquired. The service processing logic includes execution logic for acquiring service data generated by an online released service model, execution logic for training a to-be-trained service model based on the service data, and execution logic for releasing the trained service model online.

A service model may be any machine learning model that implements corresponding service functions. The model self-taught learning service may be an iteration update and use process of the model, that is, a process in which the model reorganizes the existing knowledge structure according to acquired new knowledge or skills (data of the acquired new knowledge or skills) during the application of the model to continuously improve the performance of the model itself and perform an iterative application.

The service processing logic of the model self-taught learning service may be a combined process of learning, training, and application of the model or may also be understood as a synthesis of the logic for processing data and the model in the process of model self-taught learning.

The execution logic for acquiring the service data generated by the online released service model may be a processing process in which the related service data is acquired during the use of the service model after the service model is online. The execution logic for training the to-be-trained service model based on the service data may be a process in which feedback training is performed on the service model according to the acquired service data in the process of model self-taught learning. The execution logic for releasing the trained service model online may be a process in which the trained service model is released online for use. Through the preceding execution logic, the overall closed-loop whole flow automatic processing of online data acquisition, model training, online use, and online data acquisition of the service model may be implemented, thereby implementing the self-taught learning of the service model.

For example, if the current service model is a target recognition model configured to recognize a preset target in an image, the corresponding model self-taught learning service may be the whole process of performing a feedback update iteration in the target recognition model, and the whole process may include generating the service data including the recognition result of a to-be-recognized image by the target recognition model and feedback information on the recognition result (such as acceptance or non-acceptance, or further including a manual target depiction result in the case of non-acceptance). The recognition result may include a determination result of whether the preset target exists or not and a region position of the preset target in the case where the preset target exists. The service data including the recognition result and the feedback information on the recognition result is used to retrain the original target recognition model to improve the target recognition performance of the model. The retrained model is published and used, thereby implementing the update iteration of the target recognition model.

A DAG is a tool that describes the progress of a project or a system. The DAG may express the service processing logic in the form of a directed acyclic graph. The DAG may be composed of nodes and edges. A node may be a component in the service processing logic that may implement a certain function. An edge may be used to connect different nodes. The edge is directional and used to represent the data flow direction between connected components. Thus, the DAG may be formed by the combination of the nodes and the edges, so that functions of different components are combined.

Components having set functions at different stages may be assembled according to a data flow direction to generate the DAG. For example, during the whole process of machine learning training, a machine learning training DAG is constructed based on components at different stages. The DAG may be saved and used as a complete machine learning model. In addition, when the DAG is operated, it is also possible to determine whether the DAG is erroneous through the operation and circulation of data between different components in the DAG.

For example, the target DAG of a whole flow corresponding to the service processing logic of the whole model self-taught learning may be generated according to the whole process of the model self-taught learning to prepare for subsequent self-taught learning of the service model according to the target DAG.

In S120, self-taught learning is performed on the to-be-trained service model according to the target DAG.

A service model self-taught learning task is executed according to the target DAG acquired in the preceding steps.

In the technical solutions of this embodiment of the present disclosure, the model self-taught learning service is implemented as a whole by using the DAG, so that the whole flow management of the model self-taught learning service is facilitated, and the management difficulty and the management cost are reduced. At the same time, the service processing logic corresponding to the model self-taught learning service is implemented as a whole based on the DAG, and there is no need to write complex code logic, so that the difficulty and technical threshold of code development are reduced.

It is to be noted that the service processing logic of the model self-taught learning service may be used for generating the target DAG according to a data flow direction as a whole during the construction of the target DAG. Alternatively, optionally, at least partial execution logic in the service processing logic is executed to generate a DAG subgraph. Directed edges are added to different DAG subgraphs according to the data flow direction to generate the target DAG.

It is to be understood that during the construction of the target DAG, nodes implementing different functions are directly connected by directed edges according to the service processing logic of the whole flow of the model self-taught learning service to form the target DAG, so that the corresponding service processing logic may be implemented. There may be a large number of nodes and complicated connections of the directed edges. As a result, the development difficulty and management difficulty are increased. For this reason, the partial independent execution logic in the service processing logic may also be executed to generate a DAG subgraph according to a data flow direction. The DAG subgraph is used as a composite node in the target DAG. Directed edges between composite nodes are established according to the data flow directions between different execution logic in the service processing logic to generate the target DAG. In this manner, the management difficulty of each composite node and subordinate node and the difficulty of subsequent code development can be effectively reduced.

The target DAG in the preceding embodiment comprises at least two DAG subgraphs. Different DAG subgraphs are configured to implement different execution logic. Different DAG subgraphs construct the target DAG based on a data flow direction of the service processing logic.

A DAG subgraph may be considered as a composite component that generates the target DAG. Different DAG subgraphs may be combined according to components of different functions. That is, it is to be understood that the target DAG may include at least two DAG subgraphs, and there is a preset connection relationship that conforms to a data flow direction of the service processing logic between every two DAG subgraphs. For example, the output data of the previous DAG subgraph is the input data of the current DAG subgraph. The output data of the current DAG subgraph may be used as the input data of the next DAG subgraph. Different DAG subgraphs implement different functions. The directed edges that conform to the preset connection relationship are used to connect the DAG subgraphs of different functions to implement the whole flow of the target DAG.

It is to be understood that since a DAG is used to express execution logic, in a model self-taught learning task, different subtasks have their own execution logic. For example, for the execution logic for acquiring the service data generated by the online released service model, the execution logic for training the to-be-trained service model based on the service data, and the execution logic for releasing the trained service model online, each relatively independent execution logic may construct a DAG subgraph. Since the service processing logic of the model self-taught learning service is constructed by each relatively independent execution logic, the DAG subgraphs having different execution logic functions may be combined and constructed to obtain the target DAG. The data flow direction of the processing logic of the service data may be the data flow direction between the execution logic. DAG subgraphs are connected by directed edges according to the data flow direction between the execution logic to construct the target DAG. It is to be understood that each DAG subgraph is a "node" of the target DAG, and an "edge" is used to connect each "node" according to the data flow direction to form the target DAG.

In the preceding embodiment, a DAG subgraph is used to implement the partial execution logic in the service processing logic, and an optional construction method of the target DAG is provided. In this manner, the construction mechanism of the target DAG is improved. At the same time, the development difficulty and the technical threshold of the partial execution logic in the service processing logic are reduced.

On the basis of the preceding technical solutions, the present disclosure also provides an optional embodiment. In this embodiment, acquisition logic for the service data in the model self-taught learning service is implemented in the form of a DAG subgraph. It is to be noted that for the part not detailed in the embodiment of the present disclosure, reference may be made to related expressions of other embodiments. The details are not repeated here.

A data processing method shown in FIG. 2 includes the steps below.

In S210, the target DAG corresponding to the service processing logic of the model self-taught learning service is acquired. DAG subgraphs in the target DAG include an acquisition DAG subgraph that implements the execution logic for acquiring the service data generated by the online released service model.

In S220, the acquisition DAG subgraph is operated to acquire the service data in the case where an acquisition condition is satisfied when the online released service model generates the service data in response to a service request.

The acquisition DAG subgraph may be a directed acyclic graph that implements the acquisition of the service data generated by the online released service model. Specifically, each function component used for service data acquisition may be combined to generate the acquisition DAG subgraph according to the data flow direction of the corresponding execution logic in the service processing logic. The released service model may, in response to the service request, operate the execution logic of the released service model, process the corresponding service request, and generate the service data. Accordingly, when the acquisition condition is satisfied, the acquisition DAG subgraph may acquire the corresponding service data for use and/or storage.

Optionally, the acquisition condition may be satisfied in the following manner: A new service model is online. It is to be understood that to update and iterate the service model, the updated service model is pushed online for use. Thus, after the updated service model is online, the service data generated by the new service model may be acquired to guide subsequent retraining of the service model.

Optionally, the service data may be acquired in the following manners: The service data is acquired according to an acquisition requirement; and the service data is divided into at least one data fragment according to acquisition time to update the service data.

The acquisition requirement may be understood as an acquisition condition to be observed when service data acquisition is required and may include but is not limited to real-time acquisition, timing acquisition, acquisition according to a preset dimension, and acquisition according to whether a condition (such as an authorization) is satisfied. After the new service model is acquired, the new service data may be stored. For example, the new service data may be stored uniformly with the old service data, or the old service data may be replaced with the new service data to implement storage update. However, in view that unified storage of the service data increases the management difficulty of the service data, it is possible to store the service data in segments according to the acquisition batches or acquisition duration to improve the management efficiency of the service data.

The acquisition time may be a batch or a moment at which the service data is acquired. Accordingly, the acquired service data is divided according to a time dimension according to different batches or moments at which the service data is acquired to implement fragmented storage of the service data. Of course, it is also possible to generate data fragments corresponding to different timestamp information according to the timestamp information generated in the acquisition process of the service data to implement allocation and storage of the service data. In an optional embodiment, the service model may be a resource recommendation model. The service data may be the interactive data of a recommended resource. Thus, a DAG is used to implement self-taught learning of the resource recommendation model in a resource recommendation scenario.

The resource recommendation model may be a machine learning model of a local resource recommendation function, such as a search engine recommendation term model or a shopping recommendation model. The interactive data for the recommended resource may be feedback data on whether the recommended resource is accepted or not. The search engine recommendation term model is used as an example. The function of the model is to acquire an input keyword and recommend a related term according to the input keyword. When the recommended term is clicked, confirmed, deleted, or complained, the generated click, confirmation, deletion and complaint data are interactive data. The shopping recommendation model is also used as an example. The model acquires a shopping keyword and pushes related item information according to the shopping keyword. The data generated when the pushed item information is clicked, forwarded, commented, bookmarked, and shared is used as the interactive data. It is to be understood that the interactive data may be fed back to guide iterative training of the resource recommendation model, assist the resource recommendation model in optimizing model parameters, and improve the accuracy of the resource recommendation result of the iteratively trained resource recommendation model. Of course, the preceding examples of the resource recommendation model are only used to explain the interactive data of the recommended resource and should not be considered as the limitation of the resource recommendation model in the present disclosure.

In another optional embodiment, the service model may be a translation model. The service data may be feedback information on a translation result. Thus, a DAG is used to implement self-taught learning of the translation model in a translation scenario. The translation scenario may be text translation and/or voice translation. This is not limited in the present disclosure.

The service model may be the translation model. The translation model may include, but is not limited to, the text translation and the voice translation. The feedback information on the translation result may be understood as whether or not to accept the translation result output by the translation model and may include at least one of data such as acceptance, rejection, reporting of translation errors, and correction result of a rejected translation result.

It is to be noted that when the translation model is used for the text translation or the voice translation, there may be errors in translation results in different cases, or different translation results are accepted at different degrees due to different professional levels of the translation results, so the feedback information generated in different situations is also different. The preceding feedback information on the translation result may be fed back to guide the iterative training of the translation model, assist the translation model in optimizing model parameters, and improve the accuracy of the translation result of the iterated translation model.

In the technical solutions provided by this embodiment of the present disclosure, the acquisition DAG subgraph is used to implement the execution logic for acquiring the service data generated by the online released service model. In this manner, automatic acquisition of the service data generated by the online released service model is controlled based on whether the acquisition condition is satisfied or not in the process of model self-taught learning service processing, and there is no need to trigger manually, so that the self-taught learning efficiency of the model is improved. At the same time, the code development difficulty and the technical threshold of the preceding execution logic are reduced.

On the basis of the preceding technical solutions, the present disclosure also provides an optional embodiment. In this embodiment, the execution logic for training the to-be-trained service model in the model self-taught learning service is implemented in the form of a DAG subgraph. It is to be noted that for the part not detailed in the embodiment of the present disclosure, reference may be made to related expressions of other embodiments. The details are not repeated here.

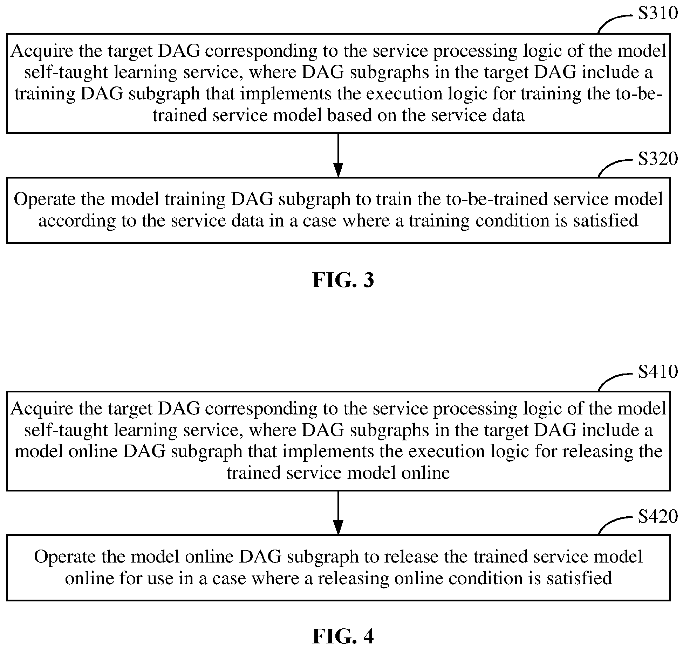

A data processing method shown in FIG. 3 includes the steps below.

In S310, the target DAG corresponding to the service processing logic of the model self-taught learning service is acquired. DAG subgraphs in the target DAG include a training DAG subgraph that implements the execution logic for training the to-be-trained service model based on the service data.

In S320, the model training DAG subgraph is operated to train the to-be-trained service model according to the service data in a case where a training condition is satisfied.

The training DAG subgraph may be a directed acyclic graph that implements training of the to-be-trained service model. Specifically, each function component used for model training may be combined to generate the model training DAG subgraph according to the data flow direction of the corresponding execution logic in the service processing logic. The service data used for training the service model may be obtained based on the acquisition DAG subgraph of the preceding embodiment. The to-be-trained model may include, but is not limited to, a classification model, a regression model, and a cluster model. When the training condition of the to-be-trained service model is satisfied, the acquired service data is used as the input of model training, and the to-be-trained service model is trained to adjust the model parameters in the to-be-trained service model, thereby gradually improving the service capability of the service model. The satisfied training condition includes at least one of the following: The start training time of a preset training period is reached, the quantity of the acquired service data reaches a preset quantity, and duration of acquisition of the service data reaches preset duration.

The preset training period may be a period in which the to-be-trained model performs training according to the service data. When the start training time of the preset training period is reached, the to-be-trained model is controlled to perform iterative training. The preset training period may be set or adjusted by a technician according to requirements or experience values or may be set through a large number of experiments. For example, the preset training period may be 24 hours, that is, the to-be-trained model may be set to be trained every 24 hours, for example, training may be set to be performed at 24 o'clock every day.

Optionally, the to-be-trained model may be trained when the acquired service data for training reaches a preset data volume. That is, the to-be-trained model is trained when sufficient service data is acquired for model training. The preset data volume may be set or adjusted by the technician according to requirements or experience values or may be set through a large number of experiments. For example, it is possible to set the preset quantity of the acquired service data to be 2 Terabyte (TB). When the acquired service data reaches 2 TB, that is, it is possible to train the to-be-trained model according to the 2 TB of the service data.

Optionally, the to-be-trained model may be trained when the duration of the acquisition of the service data for training reaches the preset duration. The preset duration may be set or adjusted by the technician according to requirements or experience values or may be set through a large number of experiments. For example, the preset duration of the acquisition of the service data is set to be 4 hours, and the service data obtained after 4 hours of data acquisition is used for training the to-be-trained model. That is, it is to be understood that newly acquired service data is used for training the to-be-trained model.

In the preceding embodiment, the model training DAG subgraph implements the execution logic for training the to-be-trained service model. In this manner, automatic training of the to-be-trained service model is controlled based on whether the training condition is satisfied or not in the process of model self-taught learning service processing, and there is no need to trigger manually, so that the self-taught learning efficiency of the model is improved. At the same time, the code development difficulty and the technical threshold of the preceding execution logic are reduced.

On the basis of the preceding technical solutions, the present disclosure also provides an optional embodiment. In this embodiment, model online publishing logic in the model self-taught learning service is implemented in the form of a DAG subgraph. It is to be noted that for the part not detailed in the embodiment of the present disclosure, reference may be made to related expressions of other embodiments. The details are not repeated here.

A data processing method shown in FIG. 4 includes the steps below.

In S410, the target DAG corresponding to the service processing logic of the model self-taught learning service is acquired. DAG subgraphs in the target DAG include a model online DAG subgraph that implements the execution logic for releasing the trained service model online.

In S420, the model online DAG subgraph is operated to release the trained service model online for use in a case where a releasing online condition is satisfied.

The model online DAG subgraph may be a directed acyclic graph used for releasing the trained service model online. Specifically, each function component used for enabling the model to be online may be combined to generate the model online DAG subgraph according to the data flow direction of the corresponding execution logic in the service processing logic. The training DAG subgraph in the preceding embodiment may be used to obtain the trained service model. The service model that is trained (that is, the trained service model) may be releasedreleased online for online use when the releasing online condition is satisfied.

The releasing online condition may be set according to at least one of the performance index of the trained service model, the publishing online time index of the trained service model, and the service processing status index of the trained service model. For example, the performance of the trained service model exceeds the performance of the service model before this training, and then the trained service model may be released online. Alternatively, a preset publishing online time limit is reached, and then the trained service model may be released online.

Optionally, the releasing online condition may be further decomposed into a releasing condition and a push condition to constrain the trained service model. Then, the trained service model may be released online by two steps of publishing and push, so that the occurrence of interdependence and mutual influence between publishing and push is avoided.

To reduce the development difficulty, model publishing and/or the model push may be implemented through DAG subgraphs.

In an optional embodiment, the model online DAG subgraph may include a model releasing DAG subgraph. Accordingly, the model online DAG subgraph may be operated to release the trained service model online for use in the following manners when the releasing online condition is satisfied: The model releasing DAG subgraph is operated to release the trained service model to a model center when the releasing condition is satisfied; and nodes and directed edges in the target DAG that implement a model push function may be used to push the trained service model from a model push center to an online platform for use when the push condition is satisfied.

Specifically, each function component used for model releasing may be combined to generate the model releasing DAG subgraph according to the data flow direction of the corresponding execution logic in the service processing logic. Accordingly, the generated model releasing DAG subgraph is operated to release the trained service model to the model center for storage and using as the basis for subsequent push when the releasing condition is satisfied.

Optionally, the satisfied releasing online condition includes at least one of the following: The current moment is in a preset releasing time period, the performance of the trained service model is improved, and preset releasing time is reached.

The preset releasing time period may be understood as a time period in which the trained service model is allowed to be released and may be set or adjusted by the technician according to requirements or experience values or may be set through a large number of experiments. For example, it may be preseted that the model may be released between 0 o'clock and 1 o'clock every day. It may be determined whether the current time is in the preset releasing time period, and if so, the trained service model is controlled to be released to the model center.

Optionally, whether to release the trained service model or not may be controlled according to whether the performance of the trained service model is improved or not. For example, the performance of the trained service model and the performance of the service model before this training may be compared. If the performance of the trained service model exceeds the performance of the service model before this training, the trained service model may be released. For another example, the performance index of the trained service model may be evaluated, and publishing may be allowed when a preset performance standard is reached. A performance evaluation index may include, but is not limited to, at least one of an accuracy ratio, an error ratio, a precision ratio, and a recall ratio. The preset performance standard may be set or adjusted by the technician according to requirements or experience values or may be set through a large number of experiments.

Optionally, it is also possible to preset a time node at which the model is published. For example, the trained service model may be set to be released to the model center at 0 o'clock every day.

Optionally, when the training of the service model is completed, a publishing reminder may be transferred to a model provider, and the trained service model may be released to the model center in response to a permission publishing instruction of the model provider.

In another optional embodiment, the model online DAG subgraph may include a model push DAG subgraph. Accordingly, the model online DAG subgraph may be operated to release the trained service model online for use in the following manners when the releasing online condition is satisfied: Nodes and directed edges in the target DAG that implement a model publishing function may be used to release the trained service model to the model center for storage when the releasing condition is satisfied; and the model push DAG subgraph is operated to control to push the trained service model from the model center to the online platform for use according to a preset push requirement when the push condition is satisfied.

Specifically, each function component used for pushing the model online may be combined to generate the model push DAG subgraph according to the data flow direction of the corresponding execution logic in the service processing logic. Accordingly, the generated model push DAG subgraph is operated to control to push the trained service model from the model center to the online platform for use according to the preset push requirement when the push condition is satisfied.

The preset push requirement may be a method for pushing the model online and may include, but is not limited to, a complete online iteration and a partial online iteration. The complete online iteration may be to completely replace the old online service model with the trained service model, process service requests, and provide service functions. The partial online iteration may be to push the trained service model online and share processing of the service requests with the old online service model. For example, 20% of the service requests may be allocated to the trained service model (that is, the new online service model) for processing, and 80% of the service requests may be allocated to the old online service model for processing. It is to be noted that an allocation ratio may be set or adjusted by the technician according to actual requirements or experience values or may be set through a large number of experiments.

Optionally, the satisfied push condition includes at least one of the following: The current moment is in a preset push time period, the quantity of the current to-be-processed service requests that are online exceeds a preset quantity threshold, and preset push time is reached. The preset push period may be understood as a time period in which the trained service model is allowed to be pushed online.

The preset push time period may be set or adjusted by the technician according to actual requirements or experience values or may be set through a large number of experiments. For example, it may be preseted that the model may be pushed between 0 o'clock and 1 o'clock every day. If the current moment is in the preset push time period, the model center may push the trained service model online.

Optionally, a threshold of a service request quantity may be preseted. If the quantity of the current to-be-processed service requests that are online exceeds the threshold, it indicates that the current old service model cannot satisfy the processing requirement for the current online service request, and a service model having a better performance is required to be online. At this time, the model center may control the trained service model to be pushed online. The threshold of the service request quantity may be set or adjusted by the technician according to actual requirements or experience values or may be set through a large number of experiments.

Optionally, the time for pushing the model may be preseted. That is, when preset model push time is reached, the model center may push the trained service model online. The preset model push time may be set or adjusted by the technician according to actual requirements or experience values or may be set through a large number of experiments.

In another optional embodiment, the model online DAG subgraph may include a model releasing DAG subgraph and a model push DAG subgraph. Accordingly, the model online DAG subgraph may be operated to release the trained service model online for use in the following manners when the releasing online condition is satisfied: The model releasing DAG subgraph is operated to release the trained service model to the model center when the releasing condition is satisfied; and the model push DAG subgraph is operated to control to push the trained service model from the model center to the online platform for use according to the preset push requirement when the push condition is satisfied. When the model online DAG subgraph is operated, the model releasing DAG subgraph may be operated to release the trained service model to the model center for storage and/or management when the releasing condition is satisfied. When the model push DAG is operated, the trained service model stored in the model center is pushed to the online platform to provide a corresponding function service in the case where the push condition is satisfied.

It is to be understood that the model releasing DAG subgraph publishes the trained service model to the model center according to the model releasing condition. The model center is configured to store, manage and push the trained service model. After the model push condition is satisfied, the model center then pushes the trained service model to the online platform according to the model push DAG subgraph.

For the explanation of the operation of the model releasing DAG subgraph and the model push DAG subgraph, reference may be made to the preceding contents, and the details are not repeated here.

In the preceding embodiment, the releasing condition and the push online condition of the trained service model are preseted respectively, and the publishing function and the online function of the model are managed separately, so that the model can be flexibly controlled to be stored and/or online respectively. In this manner, the dependence between the publishing of the model and the online push of the model is reduced, and the model management efficiency in the self-taught learning process of the service model is improved.

In the technical solutions provided by this embodiment of the present disclosure, the model online DAG subgraph implements the execution logic for releasing the trained service model online. In this manner, automatic online publishing of the trained service model is controlled based on whether the releasing online condition is satisfied or not in the process of model self-taught learning service processing, and there is no need to trigger manually, so that the self-taught learning efficiency of the model is improved. At the same time, the code development difficulty and the technical threshold of the preceding execution logic are reduced.

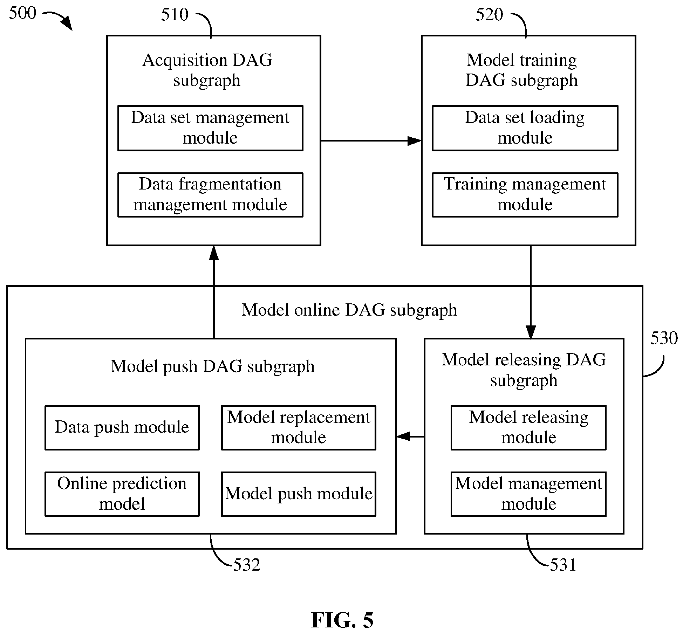

On the basis of the preceding embodiments, the present disclosure also provides a preferred embodiment to further improve the whole flow of service model self-taught learning. Referring to a diagram of a service model DAG shown in FIG. 5, the service model DAG 500 includes an acquisition DAG subgraph 510, a model training DAG subgraph 520, and a model online DAG subgraph 530. The model online DAG subgraph 530 may also include a model releasing DAG subgraph 53 1 and a model push DAG subgraph 532. Each DAG subgraph is connected according to the data flow direction shown in FIG. 5.

The acquisition DAG subgraph 510 includes a data set management module and a data fragmentation management module. The data set management module can perform unified management on a data set and a data source and can import required data from different data sets. The data fragmentation management module can help the data set to be stored and replaced in fragments according to different time periods or timestamps, can enable the data set to be incrementally updated, and can support read of data set information of different fragments and different time periods. For example, a time period is configured and selected according to a data acquisition requirement. A data fragment whose timestamp is located in the time period is selected from the data fragmentation management module according to a preset data read path and used as a training data set needed to train the model.

The model training DAG subgraph 520 includes a data set loading module and a training management module. The data set loading module reads a training data set generated in the acquisition DAG subgraph, trains the service model through the training management module, and generates a new service model after training.

The model releasing DAG subgraph 531 includes a model management module and a model releasing module. When the model is trained, the model management module may use configuration parameters to indicate whether to release the generated model to the model management module for unified management after the training is completed. The model releasing module publishes the model to the model center according to a preset publishing rule.

The model push DAG subgraph 532 includes a model push module, a model replacement module, an online prediction module, and a data push module. The model push module is responsible for releasing the new service model online. The model replacement module controls the replacement of a model version and updates the version of the model by selecting the method for completely replacing the new service model or the method for partially replacing the new service model. The online prediction module may record the update information of the model, predict the reflux of the service data, and dynamically update an online model when an online prediction request is received, so that the update of the model is completed without stopping. The online prediction module may store the use requirement of the model user and use the use requirement as local data. The data push module pushes the local data to a new data fragment in the data fragmentation management module for retraining in a subsequent model iteration process. For the implementation of the preceding various data processing methods, the present disclosure also provides an optional embodiment of an execution apparatus for implementing the data processing methods. This embodiment may be applied to the machine learning application scenario. The apparatus is configured in an electronic device to implement the data processing method provided in any embodiment of the present disclosure.

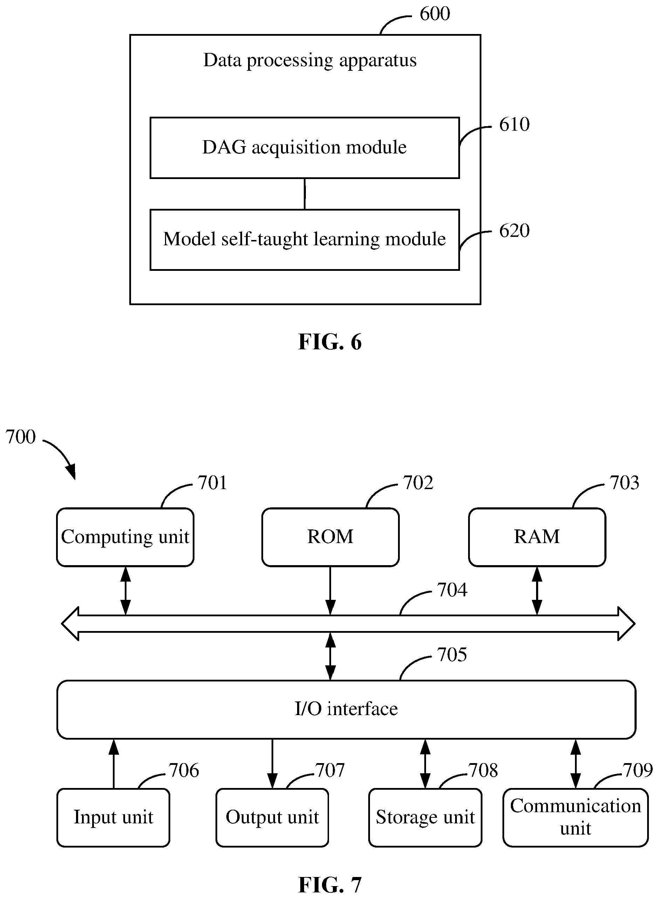

Referring further to a data processing apparatus 600 shown in FIG. 6, the apparatus includes a DAG acquisition module 610 and a model self-taught learning module 620.

The DAG acquisition module 610 is configured to acquire the target DAG corresponding to the service processing logic of the model self-taught learning service. The service processing logic includes execution logic for acquiring the service data generated by the online released service model, execution logic for training the to-be-trained service model based on the service data, and execution logic for releasing the trained service model online.

The model self-taught learning module 620 is configured to perform self-taught learning on the to-be-trained service model according to the target DAG.

In the technical solutions of this embodiment of the present disclosure, the model self-taught learning service is implemented as a whole by using the DAG, so that the whole flow management of the model self-taught learning service is facilitated, and the management difficulty and the management cost are reduced. At the same time, the whole service processing logic corresponding to the model self-taught learning service is implemented as a whole based on the DAG, and there is no need to write complex code logic, so that the difficulty and technical threshold of code development are reduced.

In an optional embodiment, the target DAG includes at least two DAG subgraphs. Different DAG subgraphs are configured to implement different execution logic. Different DAG subgraphs construct the target DAG based on the data flow direction of the service processing logic.

In an optional embodiment, if the DAG subgraphs include an acquisition DAG subgraph that implements the execution logic for acquiring the service data generated by the online released service model, the model self-taught learning module 620 includes a service data acquisition unit.

The service data acquisition unit is configured to operate the acquisition DAG subgraph to acquire the service data in the case where the acquisition condition is satisfied when the online released service model generates the service data in response to the service request.

Optionally, the acquisition condition may be satisfied in the following manner: A new service model is online.

Optionally, the service data acquisition unit may include a requirement acquisition subunit and a data update subunit.

The requirement acquisition subunit is configured to acquire the service data according to the acquisition requirement.

The data update subunit is configured to divide the service data into at least one data fragment according to the acquisition time to update the service data.

In an optional embodiment, if the DAG subgraphs include a training DAG subgraph that implements the execution logic for training the to-be-trained service model based on the service data, the model self-taught learning module 620 includes a model training unit.

The model training unit is configured to operate the model training DAG subgraph to train the to-be-trained service model according to the service data when the training condition is satisfied.

Optionally, the satisfied training condition includes at least one of the following: The training start time of the preset training period is reached, the quantity of the acquired service data reaches the preset quantity, and the duration of the acquisition of the service data reaches the preset duration.

In an optional embodiment, if the DAG subgraphs include a model online DAG subgraph that implements the execution logic for releasing the trained service model and enabling the trained service model to be online, the model self-taught learning module 620 includes a model online unit.

The model online unit is configured to operate the model online DAG subgraph to release the trained service model online for use when the releasing online condition is satisfied.

In an optional embodiment, the model online DAG subgraph includes a model releasing DAG subgraph and a model push DAG subgraph.

The model online unit includes a model publishing subunit and a DAG push subunit.

The model publishing subunit is configured to operate the model releasing DAG subgraph to release the trained service model to the model center when the releasing condition is satisfied.

The DAG push subunit is configured to operate the model push DAG subgraph to control to push the trained service model from the model center to the online platform for use according to the preset push requirement when the push condition is satisfied.

Optionally, the satisfied releasing condition includes at least one of the following: The current moment is in the preset releasing time period, the performance of the trained service model is improved, and the preset releasing time is reached.

Optionally, the satisfied push condition may include at least one of the following: The current moment is in the preset push time period, the quantity of the current to-be-processed service requests that are online exceeds the preset quantity threshold, and the preset push time is reached.

In an optional embodiment, the service model is the resource recommendation model, and the service data is the interactive data of the recommended resource.

Alternatively, the service model is the translation model, and the service data is the feedback information on the translation result.

The preceding product may perform the method provided by any embodiment of the present disclosure, and has functional modules and beneficial effects corresponding to the performed method.

In the technical solutions of the present disclosure, the collection, storage, use, processing, transmission, provision, and disclosure of service data involved are in compliance with provisions of relevant laws and regulations and do not violate public order and good customs.

According to an embodiment of the present disclosure, the present disclosure also provides an electronic device, a readable storage medium, and a computer program product.

FIG. 7 is a block diagram of an example electronic device 700 that is configured to implement an embodiment of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 7, the device 700 includes a computing unit 701. The computing unit 701 may perform various appropriate actions and processing according to a computer program stored in a read-only memory (ROM) 702 or a computer program loaded into a random-access memory (RAM) 703 from a storage unit 708. Various programs and data required for the operation of the device 700 may also be stored in the RAM 703. The computing unit 701, the ROM 702, and the RAM 703 are connected to each other through a bus 704. An input/output (I/O) interface 705 is also connected to the bus 704.

Multiple components in the device 700 are connected to the I/O interface 705. The multiple components include an input unit 706 such as a keyboard or a mouse, an output unit 707 such as various types of displays or speakers, the storage unit 708 such as a magnetic disk or an optical disc, and a communication unit 709 such as a network card, a modem or a wireless communication transceiver. The communication unit 709 allows the device 700 to exchange information/data with other devices over a computer network such as the Internet and/or various telecommunications networks.

The computing unit 701 may be various general-purpose and/or special-purpose processing components having processing and computing capabilities. Examples of the computing unit 701 include, but are not limited to, a central processing unit (CPU), a graphics processing unit (GPU), a special-purpose artificial intelligence (AI) computing chip, a computing unit executing machine learning models and algorithms, a digital signal processor (DSP), and any appropriate processor, controller and microcontroller. The computing unit 701 performs various methods and processing described above, such as the data processing method. For example, in some embodiments, the data processing method may be implemented as a computer software program tangibly contained in a machine-readable medium such as the storage unit 708. In some embodiments, part or all of computer programs may be loaded and/or installed on the equipment 700 via the ROM 702 and/or the communication unit 709. When the computer program is loaded to the RAM 703 and executed by the computing unit 701, one or more steps of the preceding data processing method may be executed. Alternatively, in other embodiments, the computing unit 701 may be configured, in any other suitable manner (for example, by means of firmware), to perform the data processing method.

Herein various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Program codes for implementation of the methods of the present disclosure may be written in one programming language or any combination of multiple programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed entirely on a machine, partly on a machine, as a stand-alone software package, partly on a machine and partly on a remote machine, or entirely on a remote machine or a server.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN) and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS). The server may also be a server of a distributed system, or a server combined with a blockchain.

Artificial intelligence is the study of making computers simulate certain human thinking processes and intelligent behaviors (such as learning, reasoning, thinking and planning) both at the hardware and software levels. Artificial intelligence hardware technologies generally include technologies such as sensors, special-purpose artificial intelligence chips, cloud computing, distributed storage and big data processing. Artificial intelligence software technologies mainly include several major technologies such as computer vision technologies, speech recognition technologies, natural language processing technologies, machine learning/deep learning technologies, big data processing technologies and knowledge mapping technologies.

Cloud computing refers to a technical system that accesses a shared elastic-and-scalable physical or virtual resource pool through a network, where resources may include servers, operating systems, networks, software, applications and storage devices and may be deployed and managed in an on-demand, self-service manner. Cloud computing can provide efficient and powerful data processing capabilities for artificial intelligence, the blockchain and other technical applications and model training.

It is to be understood that various forms of the preceding flows may be used with steps reordered, added, or removed. For example, the steps described in the present disclosure may be executed in parallel, in sequence, or in a different order as long as the desired result of the technical solutions provided in the present disclosure is achieved. The execution sequence of these steps is not limited herein.

## Claims

1. A data processing method, comprising:
acquiring (S110) a target directed acyclic graph, DAG, corresponding to a service processing logic of a model self-taught learning service, wherein the service processing logic comprises: execution logic for acquiring service data generated by an online released service model, execution logic for training a to-be-trained service model based on the service data, and execution logic for releasing the trained service model online; and
performing (S120) self-taught learning on the to-be-trained service model according to the target DAG;
wherein the target DAG comprises at least two DAG subgraphs, different DAG subgraphs are configured to implement different execution logic, and the different DAG subgraphs construct the target DAG based on a data flow direction of the service processing logic;
**characterized in that**, in a case where the at least two DAG subgraphs comprise a training DAG subgraph that implements the execution logic for training the to-be-trained service model based on the service data, performing the self-taught learning on the to-be-trained service model according to the target DAG comprises:
operating the model training DAG subgraph to train the to-be-trained service model according to the service data in a case where a training condition is satisfied;
wherein the satisfied training condition comprises at least one of the following: start training time of a preset training period being reached, and duration of acquisition of the service data reaching preset duration.

2. The method according to claim 1, wherein in a case where the at least two DAG subgraphs comprise an acquisition DAG subgraph that implements the execution logic for acquiring the service data generated by the online released service model, performing the self-taught learning on the to-be-trained service model according to the target DAG comprises:
operating the acquisition DAG subgraph to acquire the service data in a case where an acquisition condition is satisfied when the online released service model generates the service data in response to a service request.

3. The method according to claim 1, wherein in a case where the at least two DAG subgraphs comprise a model online DAG subgraph that implements the execution logic for releasing the trained service model online, performing the self-taught learning on the to-be-trained service model according to the target DAG comprises:
operating the model online DAG subgraph to release the trained service model online in a case where a releasing online condition is satisfied.

4. The method according to claim 3, wherein the model online DAG subgraph comprises a model releasing DAG subgraph and a model push DAG subgraph; and
operating the model online DAG subgraph to release the trained service model online when the releasing online condition is satisfied comprises:
operating the model releasing DAG subgraph to release the trained service model to a model center when a releasing condition is satisfied; and
operating the model push DAG subgraph to control to push the trained service model from the model center to an online platform according to a preset push requirement in a case where a push condition is satisfied.

5. The method according to any one of claims 1 to 4, wherein a service model is a resource recommendation model, and the service data is interactive data of a recommended resource; or
a service model is a translation model, and the service data is feedback information on a translation result.

6. A data processing apparatus, **characterized by** comprising:
a directed acyclic graph, DAG, acquisition module (610) configured to acquire a target DAG corresponding to service processing logic of a model self-taught learning service, wherein the service processing logic comprises execution logic for acquiring service data generated by an online released service model, execution logic for training a to-be-trained service model based on the service data, and execution logic for releasing the trained service model online; and
a model self-taught learning module (620) configured to perform self-taught learning on the to-be-trained service model according to the target DAG;
wherein the target DAG comprises at least two DAG subgraphs, different DAG subgraphs are configured to implement different execution logic, and the different DAG subgraphs construct the target DAG based on a data flow direction of the service processing logic;
**characterized in that**, in a case where the at least two DAG subgraphs comprise a training DAG subgraph that implements the execution logic for training the to-be-trained service model based on the service data, the model self-taught learning module comprises:
a model training unit configured to operate the model training DAG subgraph to train the to-be-trained service model according to the service data in a case where a training condition is satisfied;
wherein the satisfied training condition comprises at least one of the following: start training time of a preset training period being reached and duration of acquisition of the service data reaching preset duration.

7. The apparatus according to claim 6, wherein in a case where the at least two DAG subgraphs comprise an acquisition DAG subgraph that implements the execution logic for acquiring the service data generated by the online released service model, the model self-taught learning module comprises:
a service data acquisition unit configured to operate the acquisition DAG subgraph to acquire the service data in a case where an acquisition condition is satisfied when the online released service model generates the service data in response to a service request.

8. The apparatus according to claim 6, wherein in a case where the at least two DAG subgraphs comprise a model online DAG subgraph that implements the execution logic for releasing the trained service model online, the model self-taught learning module comprises:
a model online unit configured to operate the model online DAG subgraph to release the trained service model online in a case where a releasing online condition is satisfied.

9. The apparatus according to claim 8, wherein the model online DAG subgraph comprises a model releasing DAG subgraph and a model push DAG subgraph; and
the model online unit comprises:
a model publishing subunit configured to operate the model releasing DAG subgraph to release the trained service model to a model center when a releasing condition is satisfied; and
a DAG push subunit configured to operate the model push DAG subgraph to control to push the trained service model from the model center to an online platform according to a preset push requirement in a case where a push condition is satisfied.

10. A non-transitory computer-readable storage medium storing computer instructions for causing a computer to execute the data processing method according to any one of claims 1 to 5.

11. A computer program product, comprising a computer program/instruction, wherein when executing the computer program/instruction, a processor performs steps of the data processing method according to any one of claims 1 to 5.

## Patentansprüche

1. Datenverarbeitungsverfahren, umfassend:
Ermitteln (S110) eines zielgerichteten azyklischen Graphen, DAG, der einer Dienstverarbeitungslogik eines Modellselbstlerndienstes entspricht, wobei die Dienstverarbeitungslogik Folgendes umfasst: eine Ausführungslogik zum Ermitteln von Dienstdaten, die von einem online freigegebenen Dienstmodell erzeugt werden, eine Ausführungslogik zum Trainieren eines zu trainierenden Dienstmodells auf der Grundlage der Dienstdaten und eine Ausführungslogik zum Online-Freigeben des trainierten Dienstmodells; und
Durchführen (S120) eines selbstständigen Lernens an dem zu trainierenden Dienstmodell entsprechend dem Ziel-DAG;
wobei der Ziel-DAG mindestens zwei DAG-Teilgraphen umfasst, wobei verschiedene DAG-Teilgraphen dazu konfiguriert sind, unterschiedliche Ausführungslogiken zu implementieren, und wobei die verschiedenen DAG-Teilgraphen den Ziel-DAG auf der Grundlage einer Datenflussrichtung der Dienstverarbeitungslogik aufbauen;
**dadurch gekennzeichnet, dass** in einem Fall, in dem die mindestens zwei DAG-Teilgraphen einen Trainings-DAG-Teilgraphen umfassen, der die Ausführungslogik zum Trainieren des zu trainierenden Dienstmodells auf der Grundlage der Dienstdaten implementiert, das Durchführen des selbstständigen Lernens an dem zu trainierenden Dienstmodell entsprechend dem Ziel-DAG Folgendes umfasst:
Betreiben des Modelltrainings-DAG-Teilgraphen, um das zu trainierende Dienstmodell entsprechend den Dienstdaten in einem Fall zu trainieren, in dem eine Trainingsbedingung erfüllt ist;
wobei die erfüllte Trainingsbedingung mindestens eines des Folgenden umfasst: die Starttrainingszeit einer voreingestellten Trainingsperiode wird erreicht und die Dauer der Ermittlung der Dienstdaten erreicht eine voreingestellte Dauer.

2. Verfahren nach Anspruch 1, wobei in einem Fall, in dem die mindestens zwei DAG-Teilgraphen einen Ermittlungs-DAG-Teilgraphen umfassen, der die Ausführungslogik zum Ermitteln der vom online freigegebenen Dienstmodell erzeugten Dienstdaten implementiert, das Durchführen des selbstständigen Lernens an dem zu trainierenden Dienstmodell entsprechend dem Ziel-DAG Folgendes umfasst:
Betreiben des Ermittlungs-DAG-Teilgraphen, um die Dienstdaten in einem Fall zu ermitteln, in dem eine Ermittlungsbedingung erfüllt ist, wenn das online freigegebene Dienstmodell die Dienstdaten als Reaktion auf eine Dienstanforderung erzeugt.

3. Verfahren nach Anspruch 1, wobei in einem Fall, in dem die mindestens zwei DAG-Teilgraphen einen Modell-Online-DAG-Teilgraphen umfassen, der die Ausführungslogik zum Online-Freigeben des trainierten Dienstmodells implementiert, das Durchführen des selbstständigen Lernens an dem zu trainierenden Dienstmodell entsprechend dem Ziel-DAG Folgendes umfasst:
Betreiben des Modell-Online-DAG-Teilgraphen, um das trainierte Dienstmodell in einem Fall online freizugeben, in dem eine Online-Freigabebedingung erfüllt ist.

4. Verfahren nach Anspruch 3, wobei der Modell-Online-DAG-Teilgraph einen Modellfreigabe-DAG-Teilgraph und einen Modell-Push-DAG-Teilgraph umfasst; und
wobei das Betreiben des Modell-Online-DAG-Teilgraphen zum Online-Freigeben des trainierten Servicemodells, wenn die Online-Freigabebedingung erfüllt ist, Folgendes umfasst:
Betreiben des Modellfreigabe-DAG- Teilgraphen, um das trainierte Dienstmodell an ein Modellzentrum freizugeben, wenn eine Freigabebedingung erfüllt ist; und
Betreiben des Modell-Push-DAG-Teilgraphen, um das trainierte Dienstmodell gesteuert vom Modellzentrum entsprechend einer voreingestellten Push-Anforderung auf eine Online-Plattform zu übertragen, wenn eine Push-Bedingung erfüllt ist.

5. Verfahren nach einem der Ansprüche 1 bis 4, wobei ein Dienstmodell ein Ressourcenempfehlungsmodell ist und die Dienstdaten interaktive Daten einer empfohlenen Ressource sind; oder
wobei ein Dienstmodell ein Übersetzungsmodell ist und die Dienstdaten Feedback-Informationen zu einem Übersetzungsergebnis sind.

6. Datenverarbeitungsvorrichtung, **gekennzeichnet durch**:
ein Modul (610) zum Ermitteln eines gerichteten azyklischen Graphen, DAG, das dazu konfiguriert ist, einen Ziel-DAG zu ermitteln, der der Dienstverarbeitungslogik eines Modellselbstlerndienstes entspricht, wobei die Dienstverarbeitungslogik eine Ausführungslogik zum Ermitteln von Dienstdaten, die von einem online freigegebenen Dienstmodell erzeugt werden, eine Ausführungslogik zum Trainieren eines zu trainierenden Dienstmodells auf der Grundlage der Dienstdaten und eine Ausführungslogik zum Online-Freigeben des trainierten Dienstmodells umfasst; und
ein Modellselbstlernmodul (620), das dazu konfiguriert ist, ein selbstständiges Lernen an dem zu trainierenden Dienstmodell entsprechend dem Ziel-DAG durchzuführen;
wobei der Ziel-DAG mindestens zwei DAG-Teilgraphen umfasst, wobei verschiedene DAG-Teilgraphen dazu konfiguriert sind, unterschiedliche Ausführungslogiken zu implementieren, und wobei die verschiedenen DAG-Teilgraphen den Ziel-DAG auf der Grundlage einer Datenflussrichtung der Dienstverarbeitungslogik aufbauen;
**dadurch gekennzeichnet, dass** in einem Fall, in dem die mindestens zwei DAG-Teilgraphen einen Trainings-DAG-Teilgraphen umfassen, der die Ausführungslogik zum Trainieren des zu trainierenden Dienstmodells auf der Grundlage der Dienstdaten implementiert, das Modellselbstlernmodul Folgendes umfasst:
eine Modelltrainingseinheit, die so konfiguriert ist, dass sie den Modelltrainings-DAG-Teilgraphen betreibt, um das zu trainierende Dienstmodell entsprechend den Dienstdaten in einem Fall zu trainieren, in dem eine Trainingsbedingung erfüllt ist;
wobei die erfüllte Trainingsbedingung mindestens eines des Folgenden umfasst: die Starttrainingszeit einer voreingestellten Trainingsperiode wird erreicht und die Dauer der Ermittlung der Dienstdaten erreicht eine voreingestellte Dauer.

7. Vorrichtung nach Anspruch 6, wobei in einem Fall, in dem die mindestens zwei DAG-Teilgraphen einen Ermittlungs-DAG-Teilgraphen umfassen, der die Ausführungslogik zum Ermitteln der vom online freigegebenen Dienstmodell erzeugten Dienstdaten implementiert, das Modellselbstlernmodul Folgendes umfasst:
eine Dienstdatenermittlungseinheit, die so konfiguriert ist, dass sie den Ermittlungs-DAG-Teilgraphen betreibt, um die Dienstdaten in einem Fall zu ermitteln, in dem eine Ermittlungsbedingung erfüllt ist, wenn das online freigegebene Dienstmodell die Dienstdaten als Reaktion auf eine Dienstanforderung erzeugt.

8. Vorrichtung nach Anspruch 6, wobei in einem Fall, in dem die mindestens zwei DAG-Teilgraphen einen Modell-Online-DAG-Teilgraphen umfassen, der die Ausführungslogik zum Online-Freigeben des trainierten Dienstmodells implementiert, das Modellselbstlernmodul Folgendes umfasst:
eine Modell-Online-Einheit, die so konfiguriert ist, dass sie den Modell-Online-DAG-Teilgraphen betreibt, um das trainierte Dienstmodell online freizugeben, wenn eine Online-Freigabebedingung erfüllt ist.

9. Vorrichtung nach Anspruch 8, wobei der Modell-Online-DAG-Teilgraph einen Modellfreigabe-DAG-Teilgraph und einen Modell-Push-DAG-Teilgraph umfasst; und
wobei die Modell-Online-Einheit Folgendes umfasst:
eine Modellveröffentlichungs-Untereinheit, die so konfiguriert ist, dass sie den Modellfreigabe-DAG-Teilgraph betreibt, um das trainierte Dienstmodell an ein Modellzentrum freizugeben, wenn eine Freigabebedingung erfüllt ist; und
eine DAG-Push-Untereinheit, die so konfiguriert ist, dass sie den Modell-Push-DAG-Teilgraphen betreibt, um das trainierte Dienstmodell entsprechend einer voreingestellten Push-Anforderung gesteuert von dem Modellzentrum auf eine Online-Plattform zu übertragen, wenn eine Push-Bedingung erfüllt ist.

10. Nichtvorübergehendes, computerlesbares Speichermedium, auf dem Computerbefehle gespeichert sind, um einen Computer zur Ausführung des Datenverarbeitungsverfahrens nach einem der Ansprüche 1 bis 5 zu veranlassen.

11. Computerprogrammprodukt, umfassend ein Computerprogramm/einen Computerbefehl, wobei bei der Ausführung des Computerprogramms/Computerbefehls ein Prozessor Schritte des Datenverarbeitungsverfahrens nach einem der Ansprüche 1 bis 5 ausführt.

## Revendications

1. Procédé de traitement de données, comprenant :
acquérir (S110) un graphe acyclique dirigé cible, DAG, correspondant à une logique de traitement de service d'un service d'apprentissage auto-didactique de modèle, dans lequel la logique de traitement de service comprend : une logique d'exécution pour acquérir des données de service générées par un modèle de service publié en ligne, une logique d'exécution pour entraîner un modèle de service à entraîner en fonction des données de service, et une logique d'exécution pour publier le modèle de service entraîné en ligne ; et
effectuer (S120) un apprentissage auto-didactique sur le modèle de service à entraîner en fonction du DAG cible ;
dans lequel le DAG cible comprend au moins deux sous-graphes DAG, sous-graphes DAG différents sont configurés pour mettre en œuvre une logique d'exécution différente, et les sous-graphes DAG différents construisent le DAG cible en fonction d'une direction de flux de données de la logique de traitement de service ;
**caractérisé en ce que**, dans un cas où les au moins deux sous-graphes DAG comprennent un sous-graphe DAG d'entraînement qui met en œuvre la logique d'exécution pour entraîner le modèle de service à entraîner en fonction des données de service, l'étape d'effectuer l'apprentissage auto-didactique sur le modèle de service à entraîner en fonction du DAG cible comprend :
faire fonctionner le sous-graphe DAG d'entraînement de modèle pour entraîner le modèle de service à entraîner en fonction des données de service dans un cas où une condition d'entraînement est satisfaite ;
dans lequel la condition d'entraînement satisfaite comprend au moins l'une des suivantes : un moment de début d'entraînement d'une période d'entraînement prédéfinie étant atteint, et une durée d'acquisition des données de service atteignant une durée prédéfinie.

2. Procédé selon la revendication 1, dans lequel, dans un cas où les au moins deux sous-graphes DAG comprennent un sous-graphe DAG d'acquisition qui met en œuvre la logique d'exécution pour acquérir les données de service générées par le modèle de service publié en ligne, l'étape d'effectuer l'apprentissage auto-didactique sur le modèle de service à entraîner en fonction du DAG cible comprend :
faire fonctionner le sous-graphe DAG d'acquisition pour acquérir les données de service dans un cas où une condition d'acquisition est satisfaite lorsque le modèle de service publié en ligne génère les données de service en réponse à une demande de service.

3. Procédé selon la revendication 1, dans lequel, dans un cas où les au moins deux sous-graphes DAG comprennent un sous-graphe DAG en ligne de modèle qui met en œuvre la logique d'exécution pour publier le modèle de service entraîné en ligne, l'étape d'effectuer l'apprentissage auto-didactique sur le modèle de service à entraîner en fonction du DAG cible comprend :
faire fonctionner le sous-graphe DAG en ligne de modèle pour publier le modèle de service entraîné en ligne dans un cas où une condition de publication en ligne est satisfaite.

4. Procédé selon la revendication 3, dans lequel le sous-graphe DAG en ligne de modèle comprend un sous-graphe DAG de publication de modèle et un sous-graphe DAG de diffusion de modèle ; et
l'étape de faire fonctionner le sous-graphe DAG en ligne de modèle pour publier le modèle de service entraîné en ligne lorsque la condition de publication en ligne est satisfaite comprend:
faire fonctionner le sous-graphe DAG de publication de modèle pour publier le modèle de service entraîné vers un centre de modèle lorsqu'une condition de publication est satisfaite ; et
faire fonctionner le sous-graphe DAG de diffusion de modèle pour commander une diffusion du modèle de service entraîné depuis le centre de modèle vers une plateforme en ligne en fonction d'une exigence de diffusion prédéfinie dans un cas où une condition de diffusion est satisfaite.

5. Procédé selon l'une quelconque des revendications 1 à 4, dans lequel un modèle de service est un modèle de recommandation de ressources, et les données de service sont des données interactives d'une ressource recommandée ; ou
un modèle de service est un modèle de traduction, et les données de service sont des informations de retour sur un résultat de traduction.

6. Appareil de traitement de données, **caractérisé par** comprenant :
un module d'acquisition de graphe acyclique dirigé, DAG (610), configuré pour acquérir un DAG cible correspondant à une logique de traitement de service d'un service d'apprentissage auto-didactique de modèle, dans lequel la logique de traitement de service comprend : une logique d'exécution pour acquérir des données de service générées par un modèle de service publié en ligne, une logique d'exécution pour entraîner un modèle de service à entraîner en fonction des données de service, et une logique d'exécution pour publier le modèle de service entraîné en ligne ; et
un module d'apprentissage auto-didactique de modèle (620) configuré pour effectuer un apprentissage auto-didactique sur le modèle de service à entraîner en fonction du DAG cible ;
dans lequel le DAG cible comprend au moins deux sous-graphes DAG, sous-graphes DAG différents sont configurés pour mettre en œuvre une logique d'exécution différente, et les sous-graphes DAG différents construisent le DAG cible en fonction d'une direction de flux de données de la logique de traitement de service ;
**caractérisé en ce que**, dans un cas où les au moins deux sous-graphes DAG comprennent un sous-graphe DAG d'entraînement qui met en œuvre la logique d'exécution pour entraîner le modèle de service à entraîner en fonction des données de service, le module apprentissage auto-didactique de modèle comprend :
une unité d'entraînement de modèle configurée pour faire fonctionner le sous-graphe DAG d'entraînement de modèle pour entraîner le modèle de service à entraîner en fonction des données de service dans un cas où une condition d'entraînement est satisfaite ;
dans lequel la condition d'entraînement satisfaite comprend au moins l'une des suivantes: un moment de début d'entraînement d'une période d'entraînement prédéfinie étant atteint et une durée d'acquisition des données de service atteignant une durée prédéfinie.

7. Appareil selon la revendication 6, dans lequel, dans un cas où les au moins deux sous-graphes DAG comprennent un sous-graphe DAG d'acquisition qui met en œuvre la logique d'exécution pour acquérir les données de service générées par le modèle de service publié en ligne, le module apprentissage auto-didactique de modèle comprend :
une unité d'acquisition de données de service configurée pour faire fonctionner le sous-graphe DAG d'acquisition pour acquérir les données de service dans un cas où une condition d'acquisition est satisfaite lorsque le modèle de service publié en ligne génère les données de service en réponse à une demande de service.

8. Appareil selon la revendication 6, dans lequel, dans un cas où les au moins deux sous-graphes DAG comprennent un sous-graphe DAG en ligne de modèle qui met en œuvre la logique d'exécution pour publier le modèle de service entraîné en ligne, le module apprentissage auto-didactique de modèle comprend :
une unité en ligne de modèle configurée pour faire fonctionner le sous-graphe DAG en ligne de modèle pour publier le modèle de service entraîné en ligne dans un cas où une condition de publication en ligne est satisfaite.

9. Appareil selon la revendication 8, dans lequel le sous-graphe DAG en ligne de modèle comprend un sous-graphe DAG de publication de modèle et un sous-graphe DAG de diffusion de modèle ; et
l'unité en ligne de modèle comprend :
une sous-unité de publication de modèle configurée pour faire fonctionner le sous-graphe DAG de publication de modèle pour publier le modèle de service entraîné vers un centre de modèle lorsqu'une condition de publication est satisfaite ; et
une sous-unité de diffusion de DGA configurée pour faire fonctionner le sous-graphe DAG de diffusion de modèle pour commander une diffusion du modèle de service entraîné depuis le centre de modèle vers une plateforme en ligne en fonction d'une exigence de diffusion prédéfinie dans un cas où une condition de diffusion est satisfaite.

10. Support de stockage non transitoire lisible par ordinateur stockant des instructions informatiques pour amener un ordinateur à mettre en œuvre le procédé de traitement de données selon l'une quelconque des revendications 1 à 5.

11. Produit de programme informatique, comprenant une programme/instruction informatique, dans lequel lorsque le programme/instruction est exécuté, un processeur met en œuvre des étapes du procédé de traitement de données selon l'une quelconque des revendications 1 à 5.
